# FASCICULE DE BREVET EUROPEEN

(11) **EP 2 425 167 B1**
(45) Date de publication et mention de la délivrance du brevet: **30.07.2014**
(21) Numéro de dépôt: 10727059.7
(22) Date de dépôt: 28.04.2010
(51) Int. Cl.: F16L 1/12, F16L 1/20

(54) **DISPOSITIF DE PROTECTION D'AU MOINS UNE CONDUITE DISPOSÉE AU FOND D'UNE ÉTENDUE D'EAU ET ENSEMBLE DE TRANSPORT DE FLUIDE ASSOCIÉ**
SCHUTZVORRICHTUNG EINER AUF DEM SEEBODEM VERLEGTEN ROHRLEITUNG UND DAZU GEHÖRIGES FLUIDTRANSPORTSYSTEM
DEVICE FOR PROTECTING AT LEAST ONE PIPE LOCATED AT THE BOTTOM OF A BODY OF WATER, AND ASSOCIATED FLUID TRANSPORT ASSEMBLY

(30) Priorité: 30.04.2009 FR 0952922
(43) Date de publication de la demande: 07.03.2012
(73) Titulaire: Technip France, 92400 Courbevoie (FR)
(72) Inventeur: RISI, Paul, F-77590 Bois Le Roi (FR); ESPINASSE, Philippe, F-76420 Bihorel (FR); BIAGGI, Jean-Pascal, F-78170 La Celle Saint Cloud (FR)
(74) Mandataire: Jacobson, Claude
(86) Numéro de dépôt international: PCT/FR2010/050811
(87) Numéro de publication internationale: WO 2010/125311

(56) Documents cités:
- AU-B2- 642 965
- GB-A- 1 393 176
- US-A- 3 240 512

## Description

La présente invention concerne un dispositif de protection d'au moins une conduite disposée au fond d'une étendue d'eau, selon le préambule de la revendication 1.

Un tel dispositif s'applique notamment à la protection de conduites de transport de fluide reposant sur le fond d'une étendue d'eau, telle qu'une mer, un océan, ou un lac.

La conduite est destinée notamment à transporter un fluide, comme par exemple des hydrocarbures, des gaz ou des mélanges de gaz et de fluides, entre une tête de puits située sur le fond de l'étendue d'eau et une zone de convergence où se rejoignent plusieurs conduites. Les fluides collectés dans la zone de convergence remontent vers une installation de surface par l'intermédiaire d'une ou de plusieurs colonnes montantes.

On connaît des champs de production d'hydrocarbures en mer qui comprennent une multitude de têtes de puits et donc un grand nombre de conduites de transport s'étendant sur le fond marin.

Il est donc parfois nécessaire d'immobiliser ces conduites les unes par rapport aux autres sur le fond marin, pour empêcher qu'elles ne se déplacent sous l'effet des courants sous-marins et éviter qu'elles n'endommagent les conduites avoisinantes ou encore les équipements sous-marins.

A cet effet, il est connu de munir la conduite d'éléments de ballastage passif qui permettent de stabiliser la position de la conduite sur le fond marin, grâce au poids fondrier des éléments de ballastage.

Ces éléments de ballastage sont par exemple constitués d'un revêtement en béton entourant la conduite sur toute sa longueur ou d'éléments annulaires en béton distribués à intervalles le long de la conduite comme décrit par exemple dans la demande française FR-A-2 400 657, ou dans US 3,240,512.

Un tel dispositif présente cependant une masse très élevée qui complique la manipulation et l'installation de la conduite au fond de l'étendue d'eau.

En outre, un tel dispositif n'assure qu'une protection partielle de la conduite, notamment contre les impacts causés par la chute d'objets ou par les interventions sous-marines.

Cette protection peut s'avérer cependant nécessaire, notamment dans le cadre du transport de liquides cryogéniques tel que les gaz naturels liquéfiés (GNL) qui sont maintenus à une température voisine de - 160°C.

Dans ce cas, les conduites utilisées présentent une double enveloppe isolante dont l'intégrité doit être protégée pour assurer un transport du fluide en toute sécurité.

Un but de l'invention est donc de fournir un dispositif de protection d'une conduite disposée dans le fond d'une étendue d'eau, qui soit simple à installer et de faible masse, tout en offrant une bonne protection de ta conduite.

A cet effet, l'invention a pour objet un dispositif selon la revendication 1.

Le dispositif selon l'invention peut comprendre l'une ou plusieurs des caractéristiques des revendications 2 à 10.

L'invention a également pour objet un ensemble de transport de fluide sur le fond d'une étendue d'eau selon la revendication 11.

L'ensemble de transport selon l'invention peut comprendre l'une ou plusieurs des caractéristiques des revendications 12 à 14.

L'invention sera mieux comprise à la lecture de la description qui va suivre, donnée uniquement à titre d'exemple, et faite en se référant aux dessins annexés, sur lesquels :
- la Figure 1 est une vue en perspective partielle de trois-quarts face d'un premier ensemble de transport selon l'invention comprenant un dispositif de protection disposé sur le fond d'une étendue d'eau ;
- la Figure 2 est une vue de dessous du dispositif de la Figure 1 ;
- la Figure 3 est une vue prise en coupe suivant le plan vertical III de la Figure 1 ; et
- la Figure 4 est une vue de dessous d'un détail du dispositif de protection de la Figure 1.

Dans tout ce qui suit, les termes « amont » et « aval » s'entendent généralement par rapport au sens normal de circulation d'un fluide.

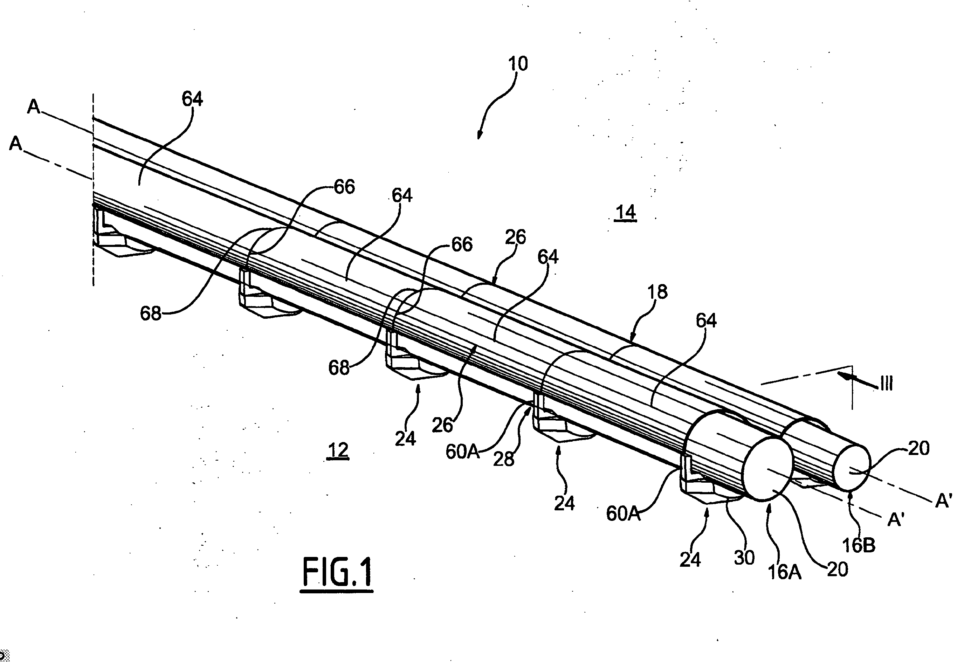

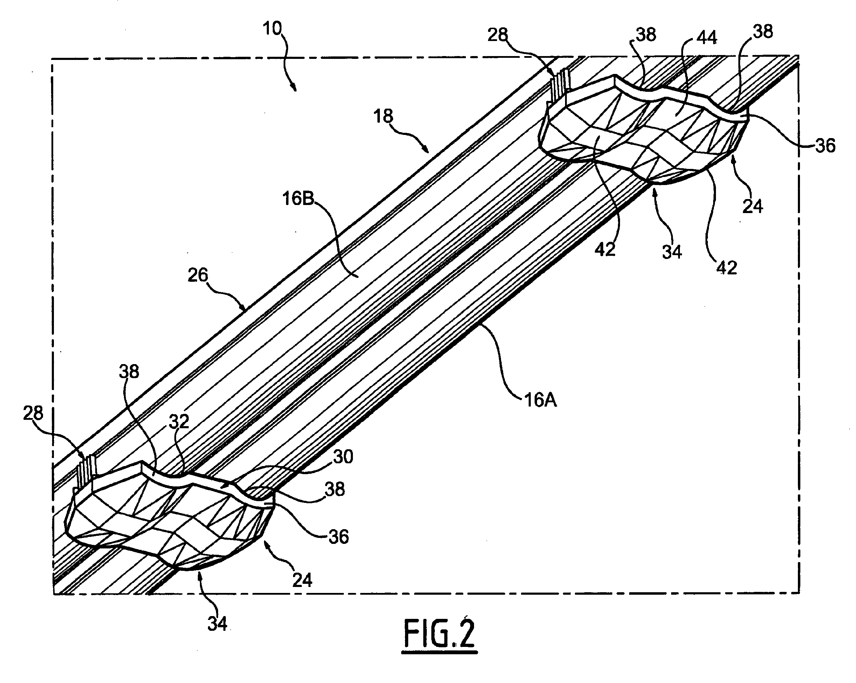

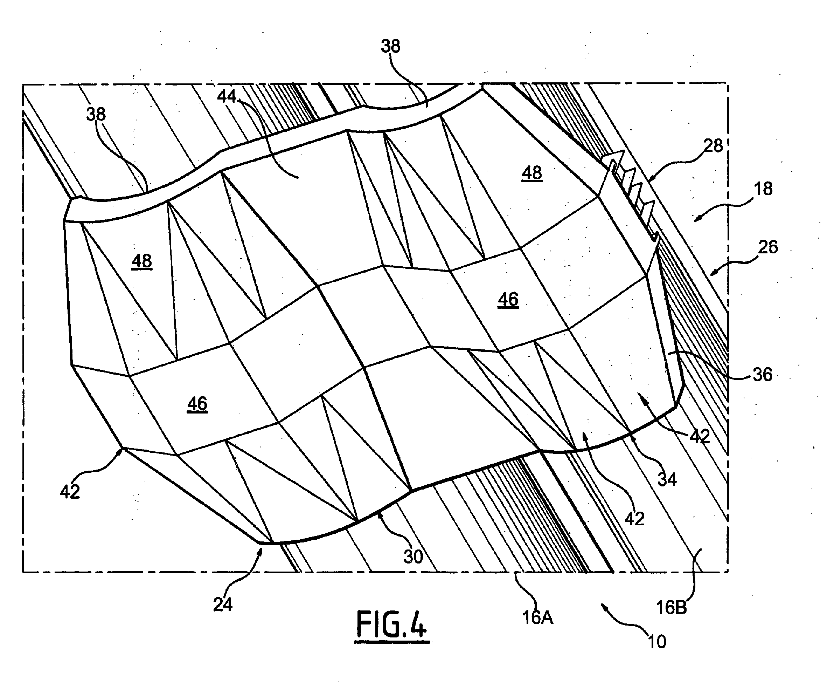

Les Figures 1 à 4 illustrent un premier ensemble de transport 10 de fluide selon l'invention reposant sur le fond 12 d'une étendue d'eau 14. Cet ensemble 10 est totalement immergé sous la surface de l'étendue d'eau 14.

L'étendue d'eau 14 est par exemple un lac, une mer, ou un océan. Elle présente une profondeur d'eau, prise entre le fond et la surface au droit de l'ensemble 10, par exemple supérieure à 15 m et comprise notamment entre 30 m et 3500 m.

L'ensemble de transport 10 est destiné à convoyer un fluide, notamment des hydrocarbures, entre un ensemble de production (non représenté) situé sur le fond 12 de l'étendue d'eau 14 en amont de l'ensemble de transport 10, et une zone de convergence (non représentée), située en aval de l'ensemble de transport 10, à partir de laquelle le fluide est transporté jusqu'à la surface de l'étendue d'eau 14.

L'ensemble de transport 10 comprend au moins une conduite de transport de fluide 16A, 16B, et un dispositif de protection 18 de la ou de chaque conduite 16A, 16B selon l'invention.

Dans l'exemple représenté sur la Figure 1, l'ensemble de transport 10 comporte deux conduites de transport parallèles 16A, 16B, la conduite 16B présentant un diamètre inférieur à celui de la conduite 16A.

Plus généralement, l'ensemble de transport 10 peut comprendre une seule conduite 16A, ou encore un nombre de conduites supérieur à deux.

Chaque conduite de transport 16A, 16B définit intérieurement un passage de circulation 20 de fluide. Ce passage 20 est raccordé en amont à l'ensemble de production et en aval à une colonne montante pour le transport continu du fluide entre l'ensemble de production et une installation de récupération en surface.

La conduite 16A, 16B peut être à base d'un assemblage de tubes métalliques simples ou encore à base d'un assemblage de tubes métalliques recouverts d'une couche d'isolant thermique elle-même éventuellement recouverte d'une gaine en matière polymérique.

Dans cet exemple, la conduite 16A, 16B est une conduite rigide réalisée par exemple à base d'un tube métallique ou d'un assemblage de tubes métalliques.

Chaque conduite 16A, 16B s'étend longitudinalement suivant un axe A-A' qui est horizontal sur les Figures.

Dans l'exemple représenté sur les Figures 1 à 4, chaque conduite 16A, 16B est formée d'une paroi tubulaire simple délimitant intérieurement un passage de circulation des fluides 20.

En variante (non représentée), la conduite 16A, 16B comprend une double enveloppe cylindrique délimitant un espace annulaire rempli d'un matériau d'isolation. En variante la conduite 16A, 16B comprend une double enveloppe cylindrique destinée au transport d'un fluide cryogénique tel que du gaz naturel liquéfié (GNL).

Le dispositif de protection 18 comprend une pluralité d'éléments 24 de ballastage et de support de chaque conduite 16A, 16B, et pour chaque conduite 16A, 16B, une coiffe longitudinale de protection 26 distincte rapportée sur les éléments de ballastage 24 par l'intermédiaire de moyens de fixation 28.

Les éléments de ballastage 24 sont répartis longitudinalement sur la longueur de chaque conduite 16A, 16B. Ils sont espacés longitudinalement les uns des autres d'une distance de quelques mètres, préférentiellement d'une dizaine de mètres. Dans cet exemple, chaque élément de ballastage 24 porte deux conduites 16A, 16B parallèles.

Chaque élément 24 est formé d'un corps lourd 30 réalisé à base d'un premier matériau qui est avantageusement du béton.

Le corps 30 délimite une surface supérieure 32 de support de conduite, une surface inférieure 34 posée contre le fond 12 de l'étendue d'eau 14, et une surface latérale 36 raccordant les surfaces 32, 34.

Le corps 30 présente une largeur, prise perpendiculairement à l'axe A-A', supérieure à la largeur totale des conduites 16A, 16B.

Il présente une longueur, prise parallèlement à l'axe A-A', inférieure à la longueur de l'intervalle séparant deux éléments de ballastage 24 consécutifs.

La surface supérieure 32 s'étend généralement horizontalement lorsque la surface inférieure 34 est posée sur un fond 12 horizontal.

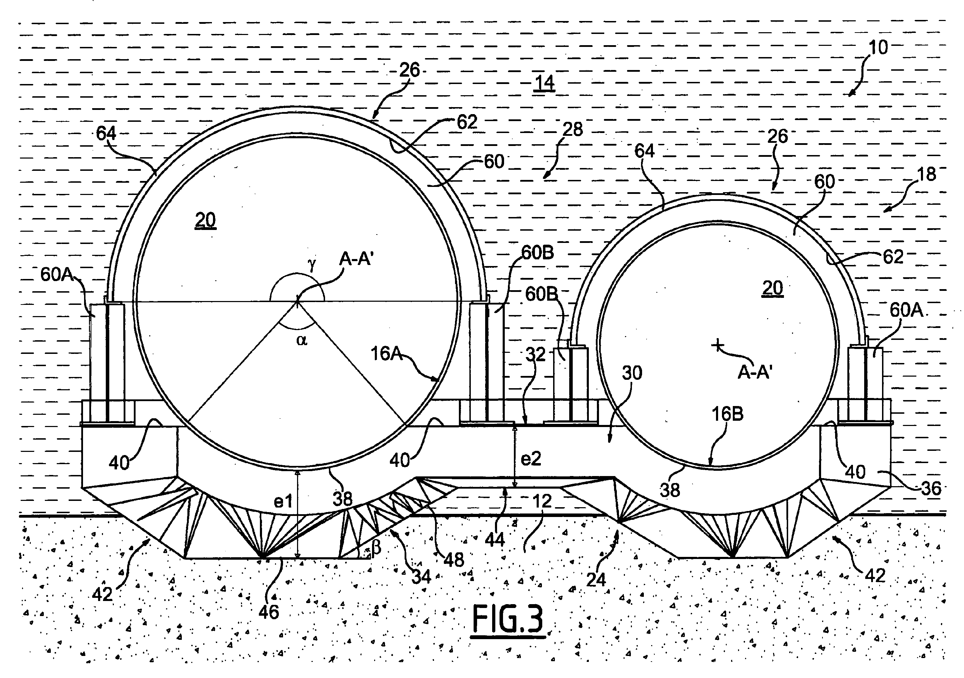

Comme illustré par la Figure 3, la surface supérieure 32 délimite, pour chaque conduite 16A, 16B, une gouttière concave 38 de réception de la conduite 16A, 16B, et de part et d'autre transversalement de chaque gouttière 38, des régions planes 40 de support des moyens de fixation 28.

Chaque gouttière 38 débouche longitudinalement en amont et en aval du corps 30.

Chaque gouttière 38 présente une concavité dirigée vers le haut. Dans cet exemple, chaque gouttière 38 présente une section transversale, prise dans un plan perpendiculaire à l'axe A-A', sensiblement en forme d'arc de cercle, de rayon conjugué au rayon extérieur de la conduite 16A, 16B qu'elle reçoit.

La gouttière 38 s'étend sur un secteur angulaire autour de l'axe A-A', d'angle α supérieur à 60°, notamment d'angle sensiblement égal à 90° autour de cet axe A-A'.

Ainsi, lorsque la conduite 16A, 16B est disposée dans la gouttière 38, sa périphérie est en contact avec la surface supérieure 32 dans la gouttière 38 suivant au moins deux génératrices de la conduite, prises le long de l'axe A-A'.

Ceci évite tout déplacement transversal intempestif de la conduite 16A, 16B.

Dans l'exemple représenté sur la Figure 3, la conduite 16A, 16B est appliquée contre la surface supérieure dans la gouttière 38 sur sensiblement toute l'étendue angulaire de la gouttière 38 autour de l'axe A-A'.

La conduite 16A, 16B fait saillie au-dessus du corps 30 à partir de la surface supérieure 32 au moins sur la moitié de son diamètre. Elle est maintenue totalement à l'écart du fond 12 de l'étendue d'eau 14 par les éléments de ballastage 24.

La surface inférieure 34 présente une forme adaptée aux caractéristiques du sol du fond 12, ainsi qu'à la nature de la conduite 16A, 16B.

La surface inférieure 34 comprend, en regard de chaque gouttière 38, une partie bombée 42 de convexité dirigée vers le bas, et, entre les parties bombées 42, une partie intermédiaire de liaison 44 sensiblement plane.

Chaque partie bombée 42 fait saillie vers le bas de part et d'autre transversalement de la partie intermédiaire 44.

Les parties bombées 42 délimitent ainsi entre elles une rigole centrale de concavité dirigée vers le bas débouchant longitudinalement de part et d'autre du corps 30.

Chaque partie bombée 42 présente une région centrale 46 sensiblement plane, destinée à être insérée dans le fond 12 de l'étendue d'eau 14, et une région périphérique inclinée 48 convergeant vers la surface supérieure 32 à partir de la région centrale 46.

La région centrale 46 s'étend sensiblement dans un plan parallèle à l'axe A-A', parallèlement à la région plane 40 de la surface supérieure 32.

La distance séparant verticalement l'axe A-A' du plan de la région centrale 46 est supérieure à la distance séparant l'axe A-A' de la région plane 40.

En outre, l'épaisseur e1 du corps 30, prise entre le point le plus bas de la gouttière 38 et la région centrale 46 est supérieure à l'épaisseur e2 du corps, prise entre la région plane 40 de la surface supérieure 32 et la partie intermédiaire 44.

La région périphérique 48 s'étend à la périphérie de la région plane 46. La région périphérique 48 converge vers la surface supérieure 32 en se déplaçant vers le haut à partir de la région centrale 46, d'une part latéralement et longitudinalement vers la surface latérale 34, et d'autre part, latéralement vers la partie intermédiaire 44.

En projection dans un plan vertical, l'angle ß d'inclinaison formé entre le plan de la région centrale 46, et la région périphérique 48 est supérieur à 10°, et est notamment compris entre 10° et 80°

La présence de la région périphérique 48 inclinée autour de la région centrale 46 plane facilite le déplacement de l'ensemble de transport 10 sur le fond 12 de l'étendue d'eau 14, notamment lorsque la conduite 16A, 16B est tractée, en limitant la résistance à la traction engendrée par le dispositif de protection 18.

Les moyens de fixation 28 comprennent, pour chaque élément de ballastage 24 et pour chaque conduite 16A, 16B, une paire de cavaliers 60A, 60B en regard disposés transversalement de part et d'autre de la gouttière 38.

Les cavaliers 60A, 60B sont avantageusement réalisés en métal.

La distance qui sépare transversalement les cavaliers 60A, 60B est supérieure au diamètre de la conduite 16A, 16B.

Un premier cavalier 60A est rapporté sur la région plane 40 de la surface supérieure située le long d'un bord latéral du corps 30. Un deuxième cavalier 60B est rapporté sur la région plane 40 située en regard de la partie de liaison 44.

Les cavaliers 60A, 60B font saillie vers le haut à partir de la surface supérieure 32.

Dans cet exemple, la coiffe 26 associée à chaque conduite 16A, 16B s'étend en regard de la gouttière 38 recevant la conduite 16A, 16B. La coiffe 26 définit, avec la gouttière 38 délimitée par la surface supérieure 32, un passage de réception de la conduite 16A, 16B.

La coiffe 26 s'étend à l'écart de la conduite 16A, 16B, en délimitant au dessus de la conduite 16A, 16B, un espace intermédiaire 60. De manière avantageuse, un matériau élastique tel que par exemple du caoutchouc est disposé dans l'espace intermédiaire 60.

La coiffe 26 couvre ainsi la conduite 16A, 16B sur un secteur angulaire d'angle γ, pris autour de l'axe A-A', supérieur à 90° et notamment sensiblement égal à 180°. Elle couvre ainsi sensiblement la région de la conduite 16A, 16B située au-dessus d'un plan horizontal passant par l'axe A-A' lorsque l'élément 24 est posé sur un fond 12 horizontal.

Dans cet exemple, la coiffe 26 présente une paroi d'épaisseur sensiblement constante en forme de tronçon de cylindre coupé suivant un plan parallèle à l'axe du cylindre engendré par le tronçon.

La coiffe 26 présente une surface intérieure 62 concave de concavité dirigée vers le bas. Son épaisseur sensiblement constante est inférieure à l'épaisseur e1 du corps 30 en regard de la gouttière 38.

Ainsi, en projection dans un plan perpendiculaire à l'axe A-A', la surface inférieure 62 présente un rayon de courbure minimal centré sur l'axe A-A', supérieur au rayon de courbure maximal de la conduite 16A, 16B qu'elle coiffe et supérieur au rayon de courbure maximal de la gouttière 38.

La coiffe 26 s'étend longitudinalement parallèlement à l'axe A-A' sur une longueur supérieure à la distance séparant longitudinalement deux éléments de ballastage 24 et sur une longueur supérieure à la longueur de chaque élément de ballastage 24.

Elle s'étend avantageusement continûment sur toute la longueur de conduite 16A, 16B placée en regard des éléments de ballastage successifs 24, depuis un élément de ballastage 24 situé le plus en amont vers un élément de ballastage 24 situé le plus en aval.

Elle s'étend totalement au dessus de la surface supérieure 32 des éléments de ballastage 24 et au dessus et à l'écart du fond 12 de l'étendue d'eau 14.

Dans cet exemple, la coiffe 26 est réalisée à base d'une pluralité d'éléments 64 de coiffe disjoints, montés bout à bout entre les éléments de ballastage successifs 24.

Chaque élément de coiffe 64 s'étend ainsi continûment entre une extrémité amont 66 fixée sur les moyens de fixation 28 d'un premier élément de ballastage 24 et une extrémité aval 68 fixée sur les moyens de fixation 28 d'un deuxième élément de ballastage 24 adjacent. La fixation de la coiffe 26 sur les moyens de fixation 28 est par exemple réalisée par vissage, par rivetage ou par boulonnage.

Chaque élément de ballastage 24 intermédiaire situé entre deux éléments de ballastage 24 porte ainsi deux éléments de coiffe 64 adjacents qui sont fixés sur l'élément de ballastage 24 par l'intermédiaire des moyens de fixation 28.

Chaque élément de coiffe 64 est ainsi suspendu par ses extrémités entre deux éléments de ballastage 24 adjacents. Entre chaque paire d'éléments de ballastage 24 adjacents, le volume délimité sous la surface inférieure 62 en l'absence de conduite 16A, 16B n'est pas obturé par une surface solidaire d'un élément de ballastage 24 et est dégagé jusqu'au fond 12.

La coiffe de protection 26 continue ainsi formée est particulièrement efficace pour protéger la conduite 16A, 16B contre les chutes d'objets ou contre les impacts causés par des interventions sous-marines. Lorsque la coiffe de protection 26 comprend avantageusement une couche de matériau élastique dans l'espace intermédiaire 60, ceci permet en outre d'absorber de façon efficace des énergies d'impact élevées. De plus, comme la coiffe de protection 26 n'est pas liée mécaniquement à la conduite rigide 16A, 16B, l'apparition d'un défaut de surface tel qu'une entaille sur la paroi de la conduite 16A, 16B est considérablement réduite. Ceci constitue un avantage majeur comparé au dispositif de protection de l'art antérieur comme les revêtements en béton par exemple.

A cet effet, la coiffe 26 est avantageusement réalisée en matière composite telle qu'une résine de fibres de carbone, en matière métallique telle que de l'acier ou en matière plastique telle que du GRP (Glass Fiber Reinforced Polyester ou polyester renforcé avec des fibres de carbone). Elle est donc relativement légère tout en étant résistante mécaniquement.

Le procédé de montage et d'installation de l'ensemble de transport 10 sur le fond 12 de l'étendue d'eau 14 va maintenant être décrit.

Initialement, chaque conduite 16A, 16B, éventuellement formée de différents éléments de tube, est assemblée.

Des éléments de ballastage 24 sont disposés sous chaque conduite 16A, 16B en étant répartis le long de la conduite 16A, 16B. A cet effet, chaque conduite 16A, 16B est introduite dans une gouttière 38 de chaque élément de ballastage 24 en plaçant sa périphérie au contact de la surface supérieure 32 dans la gouttière 38.

La conduite 16A, 16B est ainsi disposée entre les cavaliers 60A, 60B et fait saillie au-dessus des cavaliers 60A, 60B.

Puis, les éléments de coiffe 64 successifs sont assemblés bout à bout en fixant l'extrémité amont 66 de chaque élément de coiffe 64 sur les cavaliers 60A, 60B d'un premier élément de ballastage 30 et l'extrémité aval 68 de l'élément de coiffe 64 sur les cavaliers 60A, 60B d'un élément de ballastage adjacent.

Une coiffe de protection 26 continue est ainsi réalisée entre les éléments de ballastage 24 sur toute la longueur de la conduite 16A, 16B à protéger.

L'ensemble de transport 10 ainsi formé est remorqué au voisinage du fond de l'étendue d'eau (« bottom tow »), puis est posé sur le fond 12 de l'étendue d'eau 14. La masse de chaque élément de ballastage 24, ajoutée à la masse de la conduite 16A, 16B engendre un enfoncement dans le fond 12 de l'étendue d'eau 14, ce qui assure une bonne stabilisation de la conduite.

Une fois posé sur le fond 12, il est encore possible d'ajuster la position de la conduite 16A, 16B, grâce à la forme avantageuse de la surface inférieure 34 des éléments de ballastage 24 et notamment de ses régions latérales 48 inclinées.

L'ensemble de transport 10 selon l'invention est donc particulièrement simple à monter et permet une installation facile d'au moins une conduite 16A, 16B sur le fond 12 de l'étendue d'eau 14, tout en offrant une protection adéquate de la conduite 16A, 16B.

De plus, la coiffe de protection 26 constituée de modules assemblés bout à bout facilite grandement les opérations d'inspection et de maintenance de la conduite. Notamment, il est très aisé de remplacer l'un des éléments constitutifs de la coiffe de protection 26 si celui-ci est endommagé.

## Revendications

1. Dispositif (18) de protection d'au moins une conduite rigide (16A, 16B) disposée au fond d'une étendue d'eau (14), du type comprenant une pluralité d'éléments disjoints (24) de ballastage de la conduite, chaque élément de ballastage (24) présentant une surface inférieure (34) destinée à être posée sur le fond (12) de l'étendue d'eau (14) et une surface supérieure (32) délimitant au moins une gouttière (38) de support de la conduite (16A, 16B), le dispositif (18) comprenant une coiffe supérieure (26) de protection de conduite,
**caractérisé en ce que** la coiffe supérieure (26) de protection de conduite raccorde au moins deux éléments de ballastage (24) disjoints pour couvrir la conduite (16A, 16B) entre les éléments de ballastage (24), la coiffe (26) s'étendant en regard de la gouttière (38) et délimitant avec la surface supérieure (32) de chaque élément de ballastage (24) un passage de réception de la conduite (16A, 16B).

2. Dispositif (18) selon la revendication 1, **caractérisé en ce qu'**au moins deux éléments de ballastage (24) portent des moyens (28) de fixation de la coiffe (26) sur les éléments de ballastage (24).

3. Dispositif (18) selon l'une quelconque des revendications précédentes, **caractérisé en ce que** la coiffe (26) présente sensiblement une forme de tronçon de cylindre de concavité dirigée vers le bas.

4. Dispositif (18) selon la revendication 3, **caractérisé en ce que** la coiffe présente une surface inférieure (62) de rayon de courbure minimal supérieur au rayon de courbure maximal de la surface supérieure (32) de l'élément de ballastage (24) en regard dans la gouttière (28).

5. Dispositif (18) selon l'une quelconque des revendications précédentes, **caractérisé en ce que** la coiffe (26) délimite, entre deux éléments de ballastage (24) adjacents, au moins un volume dégagé vers le bas en l'absence de conduite (16A, 16B).

6. Dispositif (18) selon l'une quelconque des revendications précédentes, **caractérisé en ce que** la surface inférieure (34) d'au moins un élément de ballastage (24) présente une partie bombée (42) de convexité dirigée vers le bas.

7. Dispositif (18) selon la revendication 6, **caractérisé en ce que** la partie bombée (42) présente une région centrale (46) sensiblement parallèle à un axe (A-A') d'immobilisation de la conduite (16A, 16B) dans l'élément de ballastage (24) et au moins une région périphérique (48) inclinée vers la surface supérieure (32) en s'éloignant de la région centrale (46).

8. Dispositif (18) selon l'une quelconque des revendications précédentes, **caractérisé en ce qu'**au moins un élément de ballastage (24) est réalisé à base d'un premier matériau, avantageusement du béton, la coiffe (26) étant réalisée à base d'un deuxième matériau, avantageusement un matériau plastique, un matériau métallique ou un matériau composite.

9. Dispositif (18) selon l'une quelconque des revendications précédentes, **caractérisé en ce que** la surface supérieure (32) de chaque élément de ballastage (24) délimite au moins deux gouttières (38) destinées à supporter chacune une conduite (16A, 16B) distincte, le dispositif (18) comprenant, en regard de chaque gouttière (38), une coiffe supérieure (26) de protection de conduite raccordant au moins deux éléments de ballastage disjoints (24) pour couvrir la conduite (16A, 16B) entre les éléments de ballastage (24), la coiffe s'étendant en regard de la gouttière (38).

10. Dispositif (18) selon l'une quelconque des revendications précédentes, **caractérisé en ce que** la coiffe (26) présente une pluralité d'éléments (64) de coiffe disposés bout à bout, chaque élément de coiffe (64) présentant une extrémité amont (66) portée par un premier élément de ballastage (24), et une extrémité aval (68) portée par un deuxième élément de ballastage (24) adjacent au premier élément de ballastage (24).

11. Ensemble (10) de transport de fluide sur le fond (12) d'une étendue d'eau (14) **caractérisé en ce qu'**il comprend :
- au moins une conduite rigide (16A, 16B) de transport de fluide ;
- un dispositif (18) de protection selon l'une quelconque des revendications précédentes, la conduite (16A, 16B) étant disposée dans le passage de réception entre la coiffe (26) et chaque élément de ballastage (24), en appui sur chaque élément de ballastage (24).

12. Ensemble (10) selon la revendication 11, **caractérisé en ce que** la conduite (16A, 16B) est appliquée sur la surface supérieure (32) en étant insérée dans chaque gouttière (38), la coiffe (26) étant disposée à l'écart de la conduite (16A, 16B).

13. Ensemble (10) selon la revendication 12, **caractérisé en ce qu'**une couche de matériau élastique est interposée dans l'espace intermédiaire (60) entre la conduite (16A, 16B) et la coiffe (26).

14. Ensemble (10) selon l'une quelconque des revendications 11 à 13, **caractérisé en ce que** la coiffe (26) couvre angulairement la conduite (16A, 16B) vers le haut sur un secteur angulaire d'angle supérieur à 90°, avantageusement d'angle sensiblement égal à 180° autour de l'axe (A-A') de la conduite (16A, 16B).

## Patentansprüche

1. Vorrichtung (18) zum Schutz wenigstens einer starren Rohrleitung (16A, 16B), die auf dem Grund einer Wasserfläche (14) angeordnet ist, des Typs aufweisend eine Mehrzahl von voneinander getrennten Elementen (24) zur Bettung der Rohrleitung, wobei jedes Bettungselement (24) aufweist eine untere Fläche (34), die dafür vorgesehen ist, um auf den Grund (12) der Wasserfläche (14) gesetzt zu werden, und eine obere Fläche (32), die wenigstens eine Halbschale (38) begrenzt zur Stützung der Rohrleitung (16A, 16B), wobei die Vorrichtung (18) eine obere Abdeckung (26) zum Schutz der Rohrleitung aufweist,
**dadurch gekennzeichnet, dass**
die obere Abdeckung (26) zum Schutz der Rohrleitung wenigstens zwei voneinander getrennte Bettungselemente (24) miteinander verbindet zum Abdecken der Rohrleitung (16A, 16B) zwischen den Bettungselementen (24), wobei die Abdeckung (26) sich gegenüberliegend der Halbschale (38) erstreckt und mit der oberen Fläche (32) von jedem Bettungselement (24) eine Passage zur Aufnahme der Rohrleitung (16A, 16B) begrenzt.

2. Vorrichtung (18) gemäß Anspruch 1, **dadurch gekennzeichnet, dass** wenigstens zwei Bettungselemente (24) Mittel (28) zur Fixierung der Abdeckung (26) an den Bettungselementen (24) haben.

3. Vorrichtung (18) gemäß irgendeinem der vorhergehenden Ansprüche, **dadurch gekennzeichnet, dass** die Abdeckung (26) im Wesentlichen eine Zylindertrommelform mit nach unten weisender Konkavität hat.

4. Vorrichtung (18) gemäß Anspruch 3, **dadurch gekennzeichnet, dass** die Abdeckung eine untere Fläche (62) mit einem minimalen Krümmungsradius hat, der hinsichtlich der Halbschale (28) größer ist als der maximale Krümmungsradius der oberen Fläche (32) des Bettungselements (24).

5. Vorrichtung (18) gemäß irgendeinem der vorhergehenden Ansprüche, **dadurch gekennzeichnet, dass** die Abdeckung (26) zwischen zwei benachbarten Bettungselementen (24) wenigstens ein Volumen begrenzt, welches nach unten hin freigelegt ist, wenn die Rohrleitung (16A, 16B) abwesend ist.

6. Vorrichtung (18) gemäß irgendeinem der vorhergehenden Ansprüche, **dadurch gekennzeichnet, dass** die untere Fläche (34) wenigstens eines Bettungselements (24) einen gewölbten Teil (42) mit nach unten gerichteter Konvexität hat.

7. Vorrichtung (18) gemäß Anspruch 6, **dadurch gekennzeichnet, dass** der gewölbte Teil (42) einen zentralen Bereich (46), der im Wesentlichen parallel ist zu einer Immobilisations-Achse (A-A') der Rohrleitung (16A, 16B) im Bettungselement (24), und wenigstens einen peripheren Bereich (48) hat, der sich von dem zentralen Bereich (46) aus erstreckend gegen die obere Fläche (32) geneigt ist.

8. Vorrichtung (18) gemäß irgendeinem der vorhergehenden Ansprüche, **dadurch gekennzeichnet, dass** wenigstens ein Bettungselement (24) realisiert ist basierend auf einem ersten Material, bevorzugt Beton, wobei die Abdeckung (26) realisiert ist basierend auf einem zweiten Material, bevorzugt einem Kunststoffmaterial, einem Metallmaterial oder einem Verbundmaterial.

9. Vorrichtung (18) gemäß irgendeinem der vorhergehenden Ansprüche, **dadurch gekennzeichnet, dass** die obere Fläche (32) jedes Bettungselements (24) wenigstens zwei Halbschalen (28) begrenzt, die dazu bestimmt sind jeweils eine Rohrleitung (16A, 16B) zu stützen, wobei die Vorrichtung (18) aufweist, gegenüberliegend jeder Halbschale (38), eine obere Abdeckung (26) zum Rohrleitungs-Schutz, die wenigstens zwei voneinander getrennte Bettungselemente (24) miteinander verbindet zum Abdecken der Rohrleitung (16A, 16B) zwischen den Bettungselementen (24), wobei sich die Abdeckung gegenüberliegend der Halbschale (38) erstreckt.

10. Vorrichtung (18) gemäß irgendeinem der vorhergehenden Ansprüche, **dadurch gekennzeichnet, dass** die Abdeckung (26) eine Mehrzahl von Abdeckungselementen (64) hat, die Stoß an Stoß angeordnet sind, wobei jedes Abdeckungselement (64) ein vorderes Ende (66) hat, das von einem ersten Bettungselement (24) gehalten ist, und ein hinteres Ende (68) hat, das von einem zweiten Bettungselement (24) gehalten ist, welches zu dem ersten Bettungselement (24) benachbart ist.

11. Einrichtung (10) zum Transport von Fluid auf dem Grund (12) einer Meeresfläche (14), **dadurch gekennzeichnet, dass** sie aufweist:
- wenigstens eine starre Rohrleitung (16A, 16B) zum Transport von Fluid,
- eine Vorrichtung (18) zum Schutz gemäß irgendeinem der vorhergehenden Ansprüche, wobei die Rohrleitung (16A, 16B) in der Aufnahmepassage zwischen der Abdeckung (26) und jedem Bettungselement (24) angeordnet ist in Auflage auf jedem Bettungselement (24).

12. Einrichtung (10) gemäß Anspruch 11, **dadurch gekennzeichnet, dass** die Rohrleitung (16A, 16B) auf die obere Fläche (32) aufgelegt ist durch Eingesetzt-sein in jede Halbschale (38), wobei die Abdeckung (26) im Abstand von der Rohrleitung (16A, 16B) angeordnet ist.

13. Einrichtung (10) gemäß Anspruch 12, **dadurch gekennzeichnet, dass** eine Schicht elastischen Materials in den Zwischenraum (60) zwischen der Rohrleitung (16A, 16B) und der Abdeckung (26) zwischeneingesetzt ist.

14. Einrichtung (10) gemäß irgendeinem der Ansprüche 11 bis 13, **dadurch gekennzeichnet, dass** die Abdeckung (26) die Rohrleitung (16A, 16B) nach oben hin winkelabdeckt über einen Winkelsektor eines Winkels von größer 90°, bevorzugt eines Winkels von im Wesentlichen gleich 180°, um die Achse (A-A') der Rohrleitung (16A, 16B).

## Claims

1. A device (18) for protecting at least one rigid pipe (16A,16B) located at the bottom of a body of water (14), comprising a plurality of disconnected ballast elements (24) for the pipe, each ballast element (24) having a lower surface (34) intended to be placed on the bottom (12) of the body of water (14) and an upper surface (32) defining at least one trough (38) for supporting the pipe (16A, 16B), said device comprising a top cover (26) for protecting the pipe,
**characterized in that** the top cover (26) for protecting the pipe connects at least two disconnected ballast elements (24) so as to cover the pipe (16A, 16B) between the ballast elements (24), the cover (26) extending opposite the trough (38) and delimiting, with the upper surface (32) of each ballast element (24), a passage for receiving the pipe (16A, 16B).

2. The device (18) according to claim 1, **characterized in that** at least two ballast elements (24) bear means (28) for fixing the cover (26) on the ballast elements (24).

3. The device (18) according to any one of the preceding claims, **characterized in that** the cover (26) substantially assumes a cylinder section shape with the concavity oriented downwards.

4. The device (18) according to claim 3, **characterized in that** the cover has a lower surface (62) with a minimum curve radius larger than the maximum curve radius of the upper surface (32) of the ballast element (24) opposite the trough (28).

5. The device (18) according to any one of the preceding claims, **characterized in that** the cover (26) defines, between two adjacent ballast elements (24), at least one volume downwardly clear in the absence of a pipe (16A, 16B).

6. The device (18) according to any one of the preceding claims, **characterized in that** the lower surface (34) of at least one ballast element (24) has a curved portion (42) with its convexity oriented downwards.

7. The device (18) according to claim 6, **characterized in that** the curved portion (42) has a central region (46) substantially parallel to an immobilization axis (A-A') of the pipe (16A, 16B) in the ballast element (24) and at least one peripheral region (48) tilted toward the upper surface (32) moving away from the central region (46).

8. The device (18) according to any one of the preceding claims, **characterized in that** at least one ballast element (24) is made with a base of a first material, advantageously concrete, the cover (26) being made with a base of a second material, advantageously a plastic, metallic or composite material.

9. The device (18) according to any one of the preceding claims, **characterized in that** the upper surface (32) of each ballast element (24) delimits at least two troughs (38) intended each to support a distinct pipe (16A, 16B), the device (18) comprising, opposite each trough (38), a top cover (26) for protecting the pipe connecting at least two disconnected ballast elements (24) to cover the pipe (16A, 16B) between the ballast elements (24), the cover extending opposite the trough (38).

10. The device (18) according to any one of the preceding claims, **characterized in that** the cover (26) has a plurality of cover elements (64) arranged end to end, each cover element (64) having an upstream end (66) supported by a first ballast element (24), and a downstream end (68) supported by a second ballast element (24) adjacent to the first ballast element (24).

11. A fluid transport assembly (10) on the bottom (12) of a body of water (14), **characterized in that** it comprises:
- at least one rigid fluid transport pipe (16A, 16B); and
- a protective device (18) according to any one of the preceding claims, the pipe (16A, 16B) being placed in the receiving passage between the cover (26) and each ballast element (24), bearing on each ballast element (24).

12. The assembly (10) according to claim 11, **characterized in that** the pipe (16A, 16B) is pressed on the upper surface (32) while being inserted into each trough (38), the cover (26) being positioned spaced away from the pipe (16A, 16B).

13. The assembly (10) according to claim 12, **characterized in that** a layer of elastic material is inserted into the intermediate space (60) between the pipe (16A, 16B) and the cover (26).

14. The assembly (10) according to any one of claims 11 to 13, **characterized in that** the cover (26) angularly upwardly covers the pipe (16A, 16B) over an angular sector with an angle greater than 90°, advantageously an angle substantially equal to 180° around the axis (A-A') of the pipe (16A, 16B).
